# EUROPEAN PATENT SPECIFICATION

(11) **EP 2 723 672 B1**
(45) Date of publication and mention of the grant of the patent: **04.11.2015**
(21) Application number: 11739200.1
(22) Date of filing: 23.06.2011
(51) Int. Cl.: B67D 3/04

(54) **CONNECTOR FOR ACTUATING DELIVERING TAPS**
VERBINDUNGSANORDNUNG ZUR BETÄTIGUNG EINES ZAPFHAHNS
RACCORD POUR L'ACTUATION D'UN ROBINET DISTRIBUTEUR

(43) Date of publication of application: 30.04.2014
(73) Proprietor: Vitop Moulding S.R.L., 15100 Alessandria (IT)
(72) Inventor: NINI, Diego, I-15100 Alessandria (IT)
(74) Representative: Garavelli, Paolo
(86) International application number: PCT/IT2011/000216
(87) International publication number: WO 2012/176221

(56) References cited:
- EP-A1- 1 627 850
- FR-A1- 2 742 207
- US-A- 4 905 875

## Description

The present invention refers to a connector for delivering taps, in particular for taps adapted to be applied onto liquid vessels of the so-called "bag in box" type.

Such vessels are generally composed of a cardboard box, inside which a bag is placed, adapted to store the liquid to be delivered. The taps are applied to the bag and the consumer, after having purchases the package, obtains an opening in the external cardboard box, makes the tap go out, breaks its warranty seal that is usually present, and actuates the tap through the pressure of his fingers, or, always with his fingers, actuates a wing-type opening mechanism, for delivering liquid.

When it is necessary to deliver liquid continuously, for example in shops where wine is dispensed, the prior art provides for the use of connectors that can be applied onto the taps and keep them constantly open, allowing to deliver liquid towards distribution tubes placed downstream of the connectors themselves.

A connector according to the preamble of claim 1 is known from EP 1 627 850 A1.

These connectors however are not satisfactory and have the following problems:
a) they are first of all composed of a great number of parts, providing, even in a normal configuration, a pouring device, an O-ring for sealing the pouring device, an internal check valve, a spring for pushing such valve, three O-rings for sealing the valve, a body, an opening handle with related small pushing plug and another spring that cooperates with the opening handle: such configuration is costly and above all complex to be assembled;
b) the internal check valve, after a prolonged use, gets dirty and must be cleaned by the end user: this operation is difficult upon disassembling, when it is necessary to detach from the connector body all components contained therein, and still more difficult, and sometimes impossible, upon assembling, when the user, not remembering the mutual coupling of the component parts, is not able any more to put them together again;
c) the presence of four sealing rings is an indication of potential leakages of the connector and of its difficult coupling with the tap;
d) the check valve is configured in order to allow a liquid outflow that is not fully satisfactory for end user needs; moreover, the spring that cooperates with the pouring element abuts, inside the pouring element itself, onto a cross-shaped support placed next to the liquid delivery opening and such support is a further obstacle and limitation for liquid to go out;
e) the connector configuration is such as to allow it an efficient anti-twisting action during its use: in fact, it tends to be longitudinally bent upon coupling it with the tap, with the risk of being broken;
f) the small plug that drives the tap opening has its contact surface with the tap shaped as a curve in order to be like the recess with which the tap opening pusher is equipped: this allows on one hand an accurate contact between small plug and tap, but on the other hand it then limits the pushing force when opening the tap itself;
g) the presence of metal elements (spring pushing the internal valve so that the connector does not lift all liquid present in the section going from the liquid-dispensing machine to the connector itself) that necessarily get in contact with liquid, requires particular steels (suitable for food contact) that are very costly; moreover, many liquids (for example milk, coffee and fruit juices) that use very aggressive liquids for cleaning the connector, in order to avoid contaminations, damage the spring that becomes dangerous and useless (it loses its properties and does not allow any more the connector valve to go back in its closing position upon disconnecting the tap, and therefore there is a danger of liquid leaking outside the connector) after the cleaning treatment;
h) there is no connector with a valve (in a single piece) that self-drives its opening and closing (depending on the liquid call "ordered" by a pump that is located between the connector and the delivering device on the counter) without the use of a metallic spring;
i) there is no check valve that is geometrically designed to perform all static seals of the connector, and of the connector with the delivering tap of the bag-in-box (or other liquid vessels), and to perform those "dynamic" connections required for opening and closing the "system";
l) the geometry of the majority of the connectors is not "intuitive" for the end user and allows also wrongly placing the plug in the connector itself, sometimes impairing its liquid seals or even worse its use;
m) sometimes, due to the shape of the majority of marketed connectors, the tap of the bag-in-box (or any other type of vessel) is not correctly placed on the same axis with respect to the connector. In this way, one runs the risk of damaging both the connector valve and the tap itself, impairing their liquid seal;
n) the upper small plug is composed of at least two plastic components.

Object of the present invention is solving the above prior art problems, by providing a connector that, with reference to the above-mentioned problems, has the following advantages:
a) it uses a special valve with a special geometry that self-drives its opening and closing depending on the recall of any pump device;
b) it is above all composed of a very reduced number of parts, removing all four sealing rings and the spring that cooperates with the internal valve: this obviously results in an inexpensive connector that is easy to be assembled;
c) the internal check valve is easy to be removed for its cleaning;
d) the check valve is geometrically designed to perform all static seals of the connector, and of the connector with the delivery tap of the bag-in-box (or other liquid vessels) and those "dynamic" seals due to the system opening and closing;
e) the check valve is equipped with an opening, to allow an outflow of liquid that is wholly satisfactory for the end user needs; moreover, it has the chance (due to its silicone material and the accurate cutting performed thereon during the post-stamping step) to perform a self-seal when it is required to close the liquid passage;
f) the connector has been reinforced and therefore it not subjected any more, as occurs in other connectors, to twisting during its use;
g) the small plug that drives the tap opening has its contact surface suitable, in order to allow a contact on a greater surface of the recess with which the tap opening pusher is equipped: this allows highly increasing the pushing force of the tap itself;
h) the small plug of the connector that drives the final tap opening is a single piece: this simplifies the assembling steps (in the old connector the pieces were two) optimising assembling costs and assembling times;
i) the internal part called body is geometrically shaped in order to allow a unique chance of placing the tap, thereby avoiding the "intuitivity" problem, that old connectors had, when using it;
l) the internal part called body is geometrically shaped in order not to allow the user to wrongly put the plug of the bag-in-box (or of any other vessel) into the connector. In practice, the problem of placing the tap not on the same axis with respect to the connector (severe problem since its use is impaired) has been solved;
m) the main blockage occurs by means of a lever device;
n) the lever device that is fastened to the connector body has geometries that enable its opening and its maintenance;
o) the lever, on its upper part, has the seat for the small plug (on which a cam profile is obtained, that will "guide" the upper small plug when opening and closing) that will efficiently block the tap in its working position;
p) the lever has strenghtening geometries (ribs), that allow the piece to have the necessary sturdiness/stiffness in time;
q) the body has necessary geometries for fastening the lever;
r) the body has necessary geometries for correctly inserting the tap;
s) the internal valve, in addition to perform liquid seals in the connector and to have the chance of behave as valves with metal springs (namely have the function of a check valve), due to its geometry and the fact that it is made of silicone, has also the property of performing the liquid seal (always due to its geometry, the fact that it is made of silicone and the accurate cutting obtained on the valve (that can be rectilinear in the preferred configuration, but also shaped as a cross, a star, etc.) between connector and plug (tap)).

The above and other objects and advantages of the invention, as will appear from the following description, are obtained by an assembly of a connector delivering tap as claimed in Claim 1. Preferred embodiments and non-trivial variations of the present invention are claimed in the dependent Claims.

It is intended that all enclosed claims are an integral part of the present disclosure.

The present invention will be better described by some preferred embodiments thereof, given as a non-limiting example, with reference to the enclosed drawings, in which:

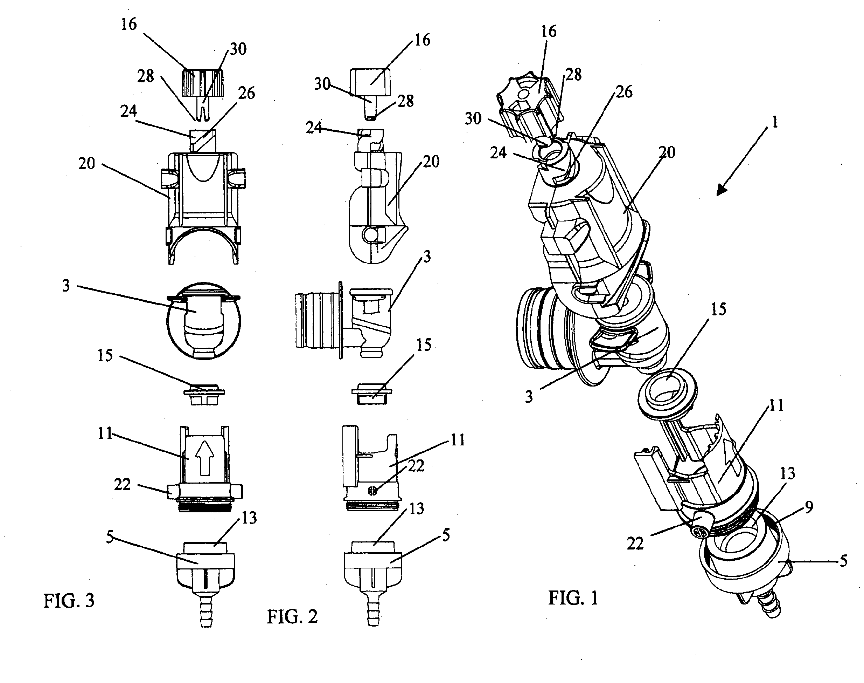

- Figure 1 is an exploded perspective view of a preferred embodiment of the connector for delivering taps of the present invention;
- Figure 2 is a side view of the connector of Figure 1;
- Figure 3 is a front view of the connector of Figure 1;
- Figures 4, 5 and 6 are respectively a side sectional view, a side view and a top view of the inventive connector in an opening position thereof;
- Figures 7, 8 and 9 are respectively a side sectional view, a side view and a top view of the inventive connector connected to a delivering tap;
- Figures 10, 11 and 12 are respectively a side sectional view, a side view and a top view of the inventive connector in a starting closing position thereof with respect to the situation in Figures 7, 8 and 9;
- Figures 13, 14 and 15 are respectively a side sectional view, a side view and a top view of the inventive connector in a complete closing position thereof with respect to the situation of Figures 10, 11 and 12;
- Figures 16, 17 and 18 are respectively a side sectional view, a side view and a top view of the inventive connector in a delivery activation position thereof with respect to the situation of Figures 13, 14 and 15;
- Figures 19, 20, 21, 22 and 22A are respectively a top perspective view, a side perspective view, a side view, a side sectional view, and a detailed sectional view, of the internal valve of the invention; and
- Figure 23 is a view with preferred variations of the internal valve of the inventive connector.

With reference to the Figures, a preferred, but not limiting, embodiment of the connector for delivering taps of the present invention, will now be described.

It will be immediately obvious that numerous variations and modifications (for example related to shape, sizes, arrangements and parts with equivalent functionality) could be made to what is described, without departing from the scope of the invention as appears from the enclosed claims.

As mentioned above, purpose of the connectors is keeping the delivering tap in its "opening" position to allow a continuous liquid delivery.

Usually, such connectors are used when it is necessary to directly connect the delivering tap to a liquid dispensing device of the type on a counter (for example dispensing devices for wine or beer or juices that can be found in places like bars and hotels).

One of the peculiarities of the inventive connector is that it is composed of five plastic pieces and one metallic spring, which, however, since it is placed in the upper part (under the small blocking plug), will never get in contact with the foodstuff liquid, and therefore will never generate the problems of the marketed connectors.

As shown in the Figures, the connector 1 for delivering taps 3 in an embodiment of the invention substantially comprises:
- at least one pouring element 5, that is a part that is used for connecting the tube 7 (usually made of silicone) that takes liquid from the tap 3 to the dispensing device (not shown). The pouring element 5 is connected through a thread 9 to the body 11 of the connector 1. Thereon, the seat 13 is obtained, on which the valve 15 is placed, that will be described below. By adjusting (tightening or leaving a clearance) the housing diameter of the valve 15, preferably made of silicone, also the necessary force for opening the valve 15 is adjusted. Such force is usually generated by a pump (not shown) that can be found at half the path between connector 1 and dispensing device and whose purpose is "moving" the liquid;
- at least one valve 15 made of silicone, that is a valve with a special geometry that allows, once assembled on the connector 1, performing "static" seals ((piece with piece of the connector 1 (pouring element 5 + valve 15 made of silicone + body 11 of the connector 1) and of the connector 1 with the delivering tap 3) of the connector 1, and further to perform the "dynamic" seals (once having placed the plug 16 and performed all opening/blocking steps of the connector 1 (and therefore once having opened, and kept in its opening position, the tap 3 in the connector 1), the valve 15 will be able to perform a sort of self-seal of liquid till the pump will generate a vacuum that will open a cut-out 18 obtained on the valve 15 itself, which will pass liquid till the pump requires liquid. The valve 15 is stamped in silicone and the cut-out 18 will be obtained thereon (in a post-stamping step) and, due to the properties of silicone and its geometry, will perform the self-seal until a pump "recall";

- a body 11, that is the part on which the threaded connection geometries of the pouring element 5 are obtained; also the guides for inserting and housing the tap 3 and the fastening areas of the lever 20 are obtained on the body 11;
- at least one lever 20, that is the element which, due to a rotation (on a fulcrum 22 obtained on the body 11), makes the tap 3 open. The lever 20 is reinforced in order not to get distorted, and is ergonomic to facilitate grasping and closing it. On its upper part, there is a cylinder 24 on which a cam 26 is obtained, that will be used to connect the small blocking plug 16; and

- at least one small blocking plug 16, with a metallic spring 28 with a special flexible geometry for inserting and fastening it to the lever 20. The internal geometry of the small plug 16 allows following the profile created on the upper cylinder 24 of the lever 20 and allows blocking the tap 3 to the connector 1. The spring 28 is used, upon opening the connector 1, to make the small plug 16 go back to its opening position.

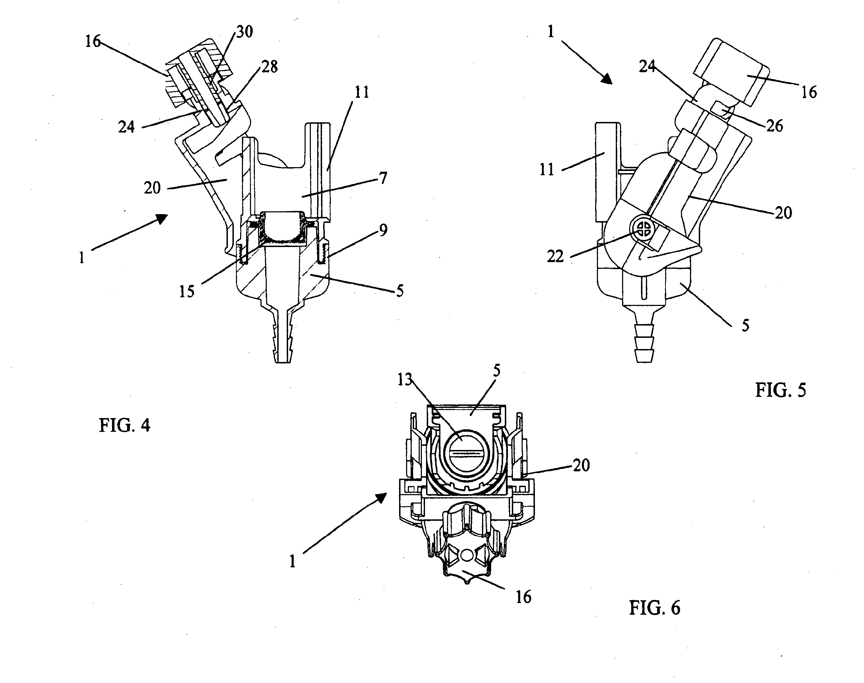

With reference now to Figures 4 to 18, the operation of the inventive connector 1 will now be described.

Figures 4, 5 and 6 are respectively a side sectional view, a side view and a top view of the inventive connector 1 in an opening position thereof, with the lever 20 in a slanted position to allow connecting it to a tap 3.

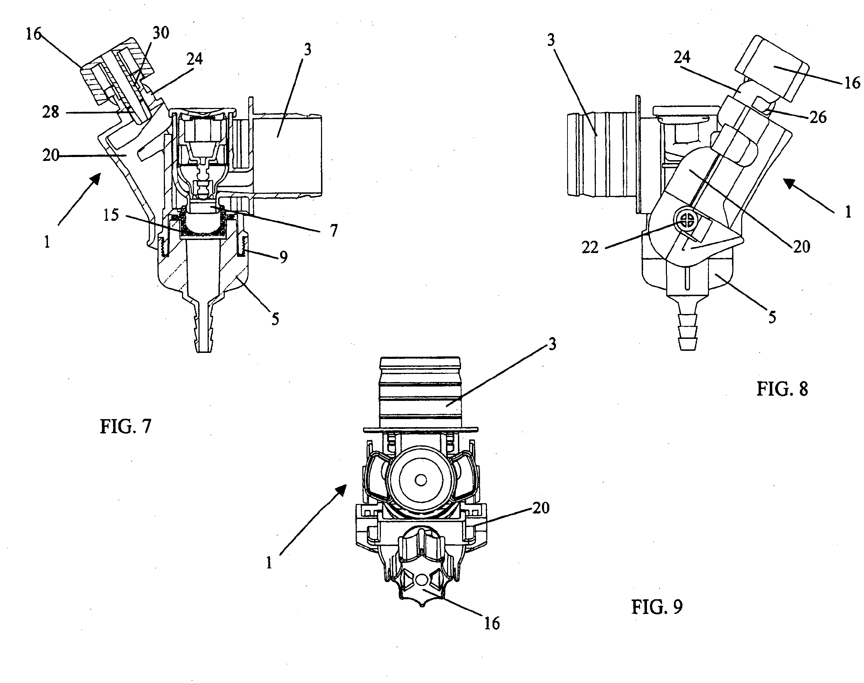

Figures 7, 8 and 9 are respectively a side sectional view, a side view and a top view of the inventive connector 1 connected to a delivering tap.

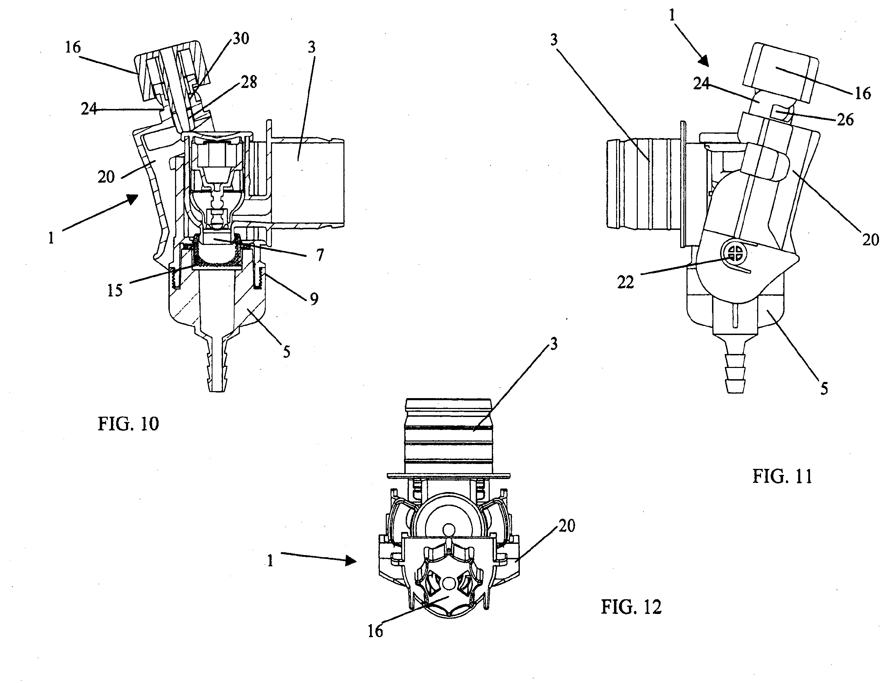

Figures 10, 11 and 12 are respectively a side sectional view, a side view and a top view of the inventive connector 1 in a starting closing position thereof with respect to the situation in Figures 7, 8 and 9: in such position, the lever 22 starts being pushed towards the body 11 in order to be overlapped to the tap 3 connected to the connector 1.

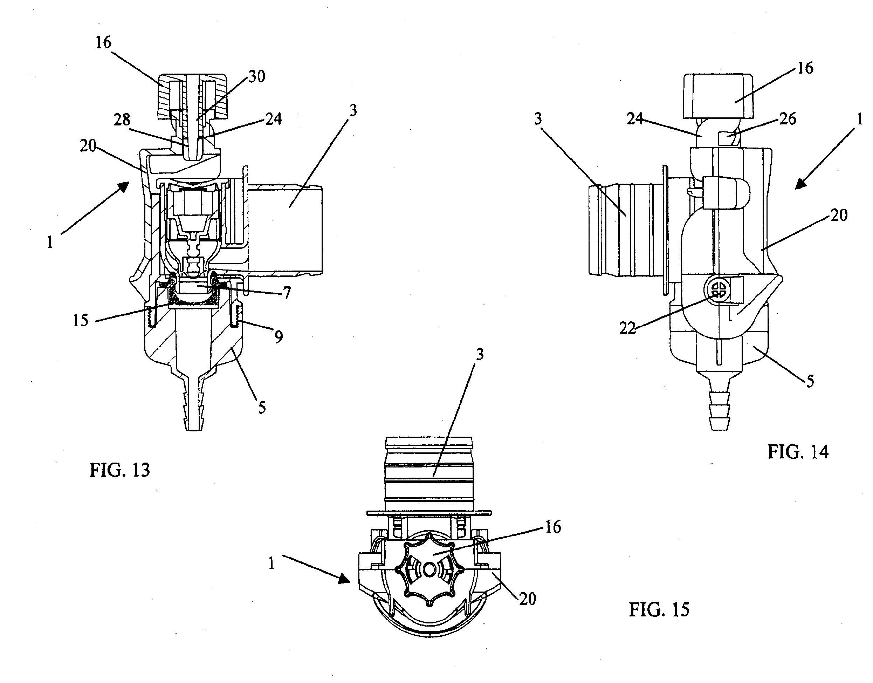

Figures 13, 14 and 15 are respectively a side sectional view, a side view and a top view of the inventive connector in a complete closing position thereof with respect to the situation of Figures 10, 11 and 12.

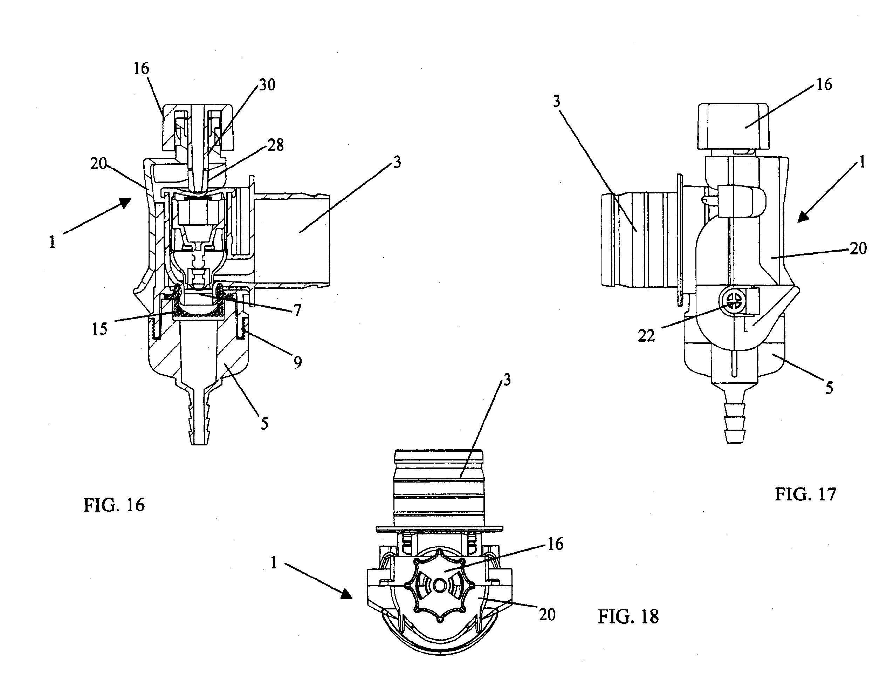

Figures 16, 17 and 18 are respectively a side sectional view, a side view and a top view of the inventive connector in a delivery activation position thereof with respect to the situation of Figures 13, 14 and 15: in this position, the rotation of the small plug 16 in the cam 26 makes the lower end 30 of the small plug 16 come in contact with the top part of the tap 3, blocking it in its operating position for a continuous delivery.

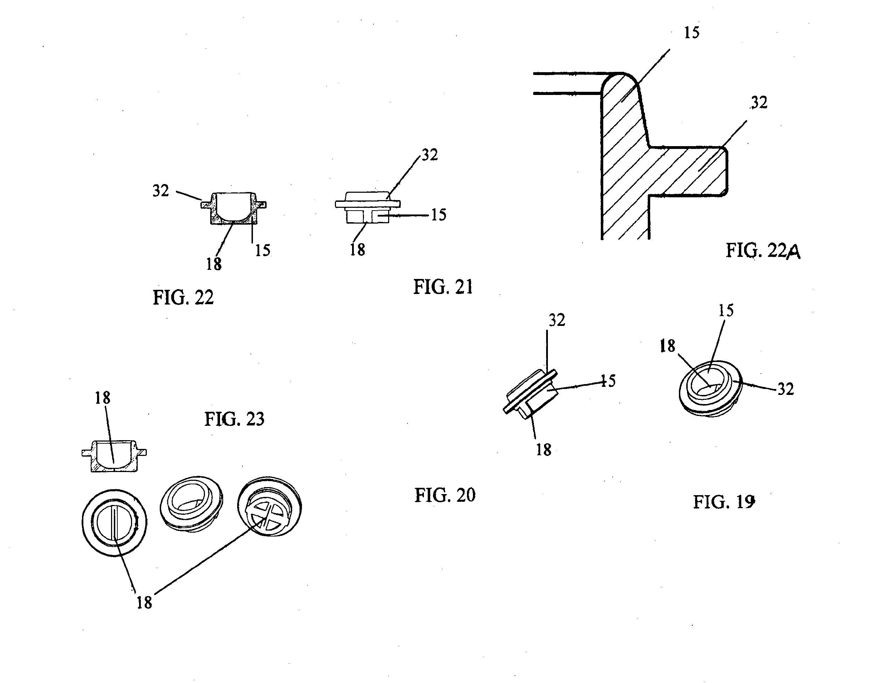

Finally, Figures 19, 20, 21, 22 and 22A are respectively a top perspective view, a side perspective view, a side view, a side sectional view, and a detailed sectional view, of the internal valve 15 of the inventive connector 1: in such Figures, it can be seen how such valve 15 is composed of a body with a circular cross section, equipped with an external lip 32, also with a circular cross section, from which the cut-out 18 departs, which performs the self-seal of the connector till the pump recall. Such cut-out 18 (as pointed out in Figures 19 to 23, in particular this latter Figure) is in the plane part of the valve 15, and is obtained through an accurate cutting that, in the preferred configuration, generates two edges. These edges, due to the properties of silicone, are able to get mutually sealed and, only upon the pump recall, open and allow the liquid passage. Silicone is currently the only material that allows performing this operation.

## Claims

1. Assembly comprising:
- at least one delivering tap (3);
- a connector (1) adapted to be operatively coupled with said delivering tap (3) wherein said connector (1) comprises, in combination:
- at least one pouring element (5) adapted to connect to a tube that takes liquid from the tap (3) to a dispensing device;
- at least one valve (15), adapted to perform static and dynamic sealing inside the connector (1) and housed inside said pouring element (5);
- a body (11), adapted to contain the tap (3) and to be operatively coupled with the pouring element (5);
- at least one small blocking plug (16), adapted to engage said tap (3) in an open and continuous delivery position of said tap, said small blocking plug (16) being operatively coupled with a metallic spring (28), said spring (28) being adapted to make the small plug (16) go back to its opening position when the connector (1) does not work together with said tap (3), **characterised in that**:
- said connector (1) comprises at least one lever (20), adapted to be operatively connected to said body (11) and to open said tap (3) through a rotation around a fulcrum (22) obtained on said body (11);
- the shape of the spring (28) is flexible in order to insert it into and fasten it to said lever (20), and **in that**
- the small blocking plug (16) is operatively connected to said lever (20).

2. . Assembly according to claim 1, **characterised in that** said pouring element (5) is connected through a thread (9) to the body (11) of the connector (1), and a seat (13) is obtained thereon, on which the valve (15) is placed, so that, by adjusting, namely by tightening or leaving a clearance, the housing diameter of the valve (15), the necessary force to open the valve (15) is also adjusted, such force being generated by a pump that is placed on a path between connector (1) and dispensing device and whose purpose is moving the liquid to be delivered.

3. . Assembly according to claim 2, **characterised in that** static seals are seals piece against piece of the connector (1), namely the pouring element (5), and of the valve (15) and the body (11), and of the connector (1) with the delivering tap (3).

4. . Assembly according to claim 2 or 3, **characterised in that** dynamic seals are seals to liquid of the valve (15) till the pump generates a vacuum that makes a cut-out (18) obtained on the valve (15) open and let liquid pass till the pump requires liquid.

5. . Assembly according to claim 1, **characterised in that** said lever (20) is reinforced in order not to get distorted, and is equipped, in its upper part, with a cylinder (24) on which a cam (26) is obtained, that is used for connecting said small blocking plug (16).

6. . Assembly according to claim 1, **characterised in that** said valve (15) is composed of a body with a circular cross section, equipped with an external lip (32), also with a circular cross section, from which said cut-out (18) departs, obtained in a plane part of said valve (15) and adapted to perform a self-seal of said connector till the pump recall.

7. . Assembly according to claim 4 or 6, **characterised in that** said cut-out (18) is made with a rectilinear shape.

8. . Assembly according to claim 4 or 6, **characterised in that** said cut-out (18) is made with the shape of a cross.

9. . Assembly according to claim 4 or 6, **characterised in that** said cut-out (18) is made with the shape of a star.

10. . Assembly according to any one of the previous claims, **characterised in that** said valve (15) is made of silicone.

## Patentansprüche

1. Gruppe mit:
- mindestens einem Versorgungshahn (3);
- einem Verbinder (1), der dazu dient, operativ mit dem genannten Versorgungshahn (3) verbunden zu werden, in dem der genannte Verbinder (1) in folgender Kombination Folgendes enthält:
- mindestens ein Ausgießelement (5), das dazu dient, sich mit einer Leitung (7) zu verbinden, die die Flüssigkeit vom Hahn (3) zu einer Zapfanlage führt;
- mindestens ein Ventil (15), das dazu dient, statische und dynamische Dichtheiten innerhalb des Verbinders (1) zu erzeugen, und innerhalb des genannten Ausgießelements (5) sitzt;
- einen Körper (11), der dazu dient, den Hahn (3) zu enthalten und sich operativ mit dem Ausgießelement (5) zu verbinden;
- mindestens einen Sperrverschluss (16), der dazu dient, den genannten Hahn (3) in einer Öffnungs- und fortlaufenden Ausgabeposition des genannten Hahns zu spannen, der genannte Sperrverschluss (16) ist operativ mit einer Metallfeder (28) verbunden, die genannte Metallfeder (28) dient dazu, den Verschluss (16) in seine Öffnungsposition zurückzuführen, wenn der Verbinder (1) nicht zusammen mit dem genannten Hahn (3) arbeitet, und ist **dadurch gekennzeichnet, dass**:
- der genannte Verbinder (1) mindestens einen Hebel (20) enthält, der dazu dient, sich operativ mit dem genannten Körper (11) zu verbinden und die Öffnung des Hahns (3) durch Drehung um einen Schwerpunkt (22) auszulösen, der am genannten Körper (11) hergestellt wurde;
- die Form der Feder (28) flexibel ist, um sie in den genannten Hebel (20) einzuführen und an ihm zu befestigen, und dadurch dass
- der Sperrverschluss (16) operativ mit dem genannten Hebel (20) verbunden ist.

2. Gruppe gemäß Patenanspruch 1, die **dadurch gekennzeichnet ist, dass** das genannte Ausgießelement (5) durch ein Gewinde (9) mit dem Körper (11) des Verbinders (1) verbunden ist, und auf diesem eine Aufnahme (13) erhalten wurde, an der das Ventil (15) positioniert ist, sodass durch Einstellen, d. h. Verkleinern oder Vergrößern des Spiels, des Durchmessers der Aufnahme des Ventils (15) auch die notwendige Kraft zum Öffnen des Ventils (15) reguliert wird, die entsprechende Kraft wird durch eine Pumpe erzeugt, die sich auf dem Weg zwischen Verbinder (1) und Zapfanlage befindet und das Ziel hat, die auszugebende Flüssigkeit zu befördern.

3. Gruppe gemäß Patentanspruch 2, die **dadurch gekennzeichnet ist, dass** die statischen Dichtheiten die Dichtheiten des Teils mit dem Teil des Verbinders (1) sind, d. h. des Ausgießelements (5) und des Ventils (15) und des Körpers (11) sowie des Verbinders (1) mit dem Versorgungshahn (3).

4. Gruppe gemäß Patentanspruch 2 oder 3, die **dadurch gekennzeichnet ist, dass** die dynamischen Dichtheiten die Dichtheiten der Flüssigkeit des Ventils (15) sind, bis die Pumpe einen Niederdruck erzeugt, sodass sich ein Einschnitt (18) öffnet, der am Ventil (15) ausgeführt wurde, und die Flüssigkeit durchlaufen lässt, solange die Pumpe diese anfordert.

5. Gruppe gemäß Patentanspruch 1, die **dadurch gekennzeichnet ist, dass** der genannte Hebel (20) verstärkt wurde, um sich nicht zu verformen, und an seinem Oberteil mit einem Zylinder (24) ausgestattet ist, an dem eine Nocke (26) erhalten wurde, die dazu dient, den genannten Sperrverschluss (16) anzuschließen.

6. Gruppe gemäß Patentanspruch 1, die **dadurch gekennzeichnet ist, dass** das genannte Ventil (15) aus einem Körper mit einem Kreisquerschnitt besteht, mit einer externen Lippe (32) ausgestattet ist, die auch einen Kreisquerschnitt hat, von dem aus der genannte Einschnitt (18) ausgeht, der an einem ebenen Teil des genannten Ventils (15) erhalten wurde und dazu dient, bis zur Aufforderung der Pumpe eine Selbstdichtheit des genannten Verbinders zu erzeugen.

7. Gruppe gemäß Patentanspruch 4 oder 6, die **dadurch gekennzeichnet ist, dass** der genannte Einschnitt (18) geradlinig ausgeführt wurde.

8. Gruppe gemäß Patentanspruch 4 oder 6, die **dadurch gekennzeichnet ist, dass** der genannte Einschnitt (18) kreuzförmig ausgeführt wurde.

9. Gruppe gemäß Patentanspruch 4 oder 6, die **dadurch gekennzeichnet ist, dass** der genannte Einschnitt (18) sternförmig ausgeführt wurde.

10. Gruppe gemäß einem beliebigen der vorhergehenden Patentansprüche, die **dadurch gekennzeichnet ist, dass** das genannte Ventil (15) aus Silikon besteht.

## Revendications

1. Groupe comprenant :
- au moins un robinet distributeur (3) ;
- un connecteur (1) approprié pour l'accouplement opérationnel au robinet distributeur (3) comprenant, en association :
- au moins un élément verseur (5) relié à un tube (7) qui transporte le liquide du robinet (3) jusqu'à la tireuse ;
- au moins une vanne (15), appropriée à assurer des tenues statiques et dynamiques à l'intérieur du connecteur (1) et située à l'intérieur de l'élément verseur (5) ;
- un corps (11), approprié à contenir le robinet (3) et à s'accoupler de manière opérationnelle à l'élément verseur (5) ;
- au moins un bouchon de blocage (16), servant à laisser le robinet (3) en position d'ouverture et de distribution continue ; le bouchon de blocage (16) est accouplé de manière opérationnelle à un ressort métallique (28) permettant au bouchon (16) de revenir en position d'ouverture quand le connecteur (1) ne travaille pas avec le robinet (3), **caractérisé en ce que** :
- le connecteur (1) comprend au moins un levier (20), relié de manière opérationnelle au corps (11), qui détermine l'ouverture du robinet (3) à travers un point d'appui (22) réalisé sur ce corps (11) ;
- la forme du ressort (28) est flexible afin de l'insérer et de le fixer au levier (20), et
- le bouchon de blocage (16) est relié de manière opérationnelle au levier (20).

2. Groupe selon la revendication 1, **caractérisé en ce que** l'élément verseur (5) est relié par un filet (9) au corps (11) du connecteur (1) ; il accueille un logement (13) où est positionnée la vanne (15), de sorte qu'en réglant le diamètre de logement de la vanne (15), c'est-à-dire en serrant ou en relâchant le jeu, on règle aussi la force nécessaire pour ouvrir la vanne (15) ; cette force, qui est créée par une pompe se trouvant sur le parcours entre le connecteur (1) et la tireuse, a pour but de déplacer le liquide à distribuer.

3. Groupe selon la revendication 2, **caractérisé en ce que** les tenues statiques sont les tenues pièce à pièce du connecteur (1), à savoir de l'élément verseur (5) et de la vanne (15) et le corps (11), et du connecteur (1) au robinet distributeur (3).

4. Groupe selon la revendication 2 ou 3, **caractérisé en ce que** les tenues dynamiques sont les tenues au liquide de la vanne (15) jusqu'à ce que la pompe produise une dépression qui fait en sorte qu'une entaille (18) réalisée sur la vanne (15) s'ouvre et laisse passer le liquide jusqu'à ce que la pompe en demande.

5. Groupe selon la revendication 1, **caractérisé en ce que** le levier (20) est renforcé pour ne pas se déformer ; il est pourvu, dans sa partie supérieure, d'un cylindre (24) où se trouve une came (26) servant à relier le bouchon de blocage (16).

6. Groupe selon la revendication 1, **caractérisé en ce que** la vanne (15) est composée d'un corps de section transversale circulaire, pourvu d'une lèvre extérieure (32), de section transversale circulaire, d'où part une entaille (18) obtenue dans une partie plate de la vanne (15) servant à effectuer une auto-tenue du connecteur jusqu'au rappel de la pompe.

7. Groupe selon la revendication 4 ou 6, **caractérisé en ce que** l'entaille (18) est réalisée en forme rectiligne.

8. Groupe selon la revendication 4 ou 6, **caractérisé en ce que** l'entaille (18) est réalisée en forme de croix.

9. Groupe selon la revendication 4 ou 6, **caractérisé en ce que** l'entaille (18) est réalisée en forme d'étoile.

10. Groupe selon l'une des revendications précédentes **caractérisé en ce que** la vanne (15) est en silicone.
